# EUROPEAN PATENT SPECIFICATION

(11) **EP 4 260 645 B1**
(45) Date of publication and mention of the grant of the patent: **04.11.2026**
(21) Application number: 21901755.5
(22) Date of filing: 08.12.2021
(51) Int. Cl.: H04W 76/14, H04W 56/00, H04W 8/00

(54) **METHOD AND APPARATUS FOR SUPPORTING DEVICE TO DEVICE COMMUNICATION FOR WIRELESS DEVICES**
VERFAHREN UND VORRICHTUNG ZUR UNTERSTÜTZUNG VON VORRICHTUNG-ZU-VORRICHTUNG-KOMMUNIKATION FÜR DRAHTLOSE VORRICHTUNGEN
PROCÉDÉ ET DISPOSITIF DE PRISE EN CHARGE DE LA COMMUNICATION DE DISPOSITIF À DISPOSITIF POUR LES DISPOSITIFS SANS FIL

(30) Priority: 09.12.2020 US 202017116312
(43) Date of publication of application: 18.10.2023
(73) Proprietor: Sierra Wireless, ULC, Halifax, Nova Scotia, B3J 0J2 (CA)
(72) Inventor: VOS, Gustav Gerald, Tsawwassen, British Columbia V4L 1S8 (CA); RAJENDRAN CHANDRIKA, Vishnu, Vancouver, British Columbia V6T 2G9 (CA); PRASAD, Gautham, Vancouver, British Columbia V6R 2Y7 (CA); LAMPE, Lutz Hans-Joachim, Vancouver, British Columbia V5R 3G8 (CA)
(74) Representative: Grünecker Patent- und Rechtsanwälte PartG mbB
(86) International application number: PCT/CA2021/051759
(87) International publication number: WO 2022/120479

(56) References cited:
- US-A1- 2017 013 575
- US-A1- 2018 091 263
- US-A1- 2020 359 366
- US-B2- 10 212 676
- US-B2- 10 764 867
- US-B2- 9 615 340

## Description

### FIELD OF THE INVENTION

The present invention pertains in general to wireless communications, and in particular to methods and apparatuses for supporting device to device communication for wireless devices.

### BACKGROUND

A legacy cellular user equipment (UE) can communicate with another UE through a base station (BS) irrespective of the proximity (e.g. distance) between them. Such communication typically involves the use of licensed resources which incurs additional cost and consumes extra time and energy in order to establish a connection over the cellular network. On the other hand, device-to-device communication, for example side link (SL) communication, can enable UEs to directly communicate with each other. SL communication can be performed with or without assistance of a BS, which can potentially improve latency and battery life of the UE. Further, use of the unlicensed band for SL (SL-U) can provide some benefits without using expensive licensed spectrum thereby reducing the cost of transmission.

SL can be regarded as a secondary radio access technology and can coexist with the primary cellular communication on the UE without additional radio hardware. To this end, the existing SL protocol is designed to operate only when both the UE's transmitter and receiver are relatively free from cellular link responsibilities. For example, this can occur when the UE is in cellular discontinuous reception (DRX) mode. During cellular DRX mode, a UE can listen for a SL grant or SL message periodically, based on its SL-DRX cycle on the dedicated time slots. This is referred to as a SL paging occasion (SL-PO). To avoid conflicts, the locations of the SL-POs can be specified in true time, based on the unique ID of the UE. Once a SL communication link is established, SL message exchange can follow a synchronous hybrid automatic repeat request (HARQ) process until completion of the message exchange. Thus, for this communication to occur, a UE that wishes to communicate with another UE via SL must be synchronized with and know the location of the destination (DST) UE's SL-PO.

Currently, there are some general requirements for SL. The SL protocol should be designed to operate on half-duplex frequency division duplex (HD-FDD) devices and should use the existing single radio. Further, the SL protocol should also be designed to meet reasonable latency and battery life targets with respect to the UEs and provide a level of flexibility for latency-power trade-off.

Current SL protocols typically only work where the source (SRC) UE and destination (DST) UE, which communicate with each other, are synchronized to the same cellular synchronization signals provided by a base station. Moreover, existing SL protocols require the SRC UE to acquire the location of the DST UE's SL-PO from the SL server. This can be accomplished for example, by obtaining the DST UE's ID and the SL-DRX period. However, existing SL protocols cannot always be used since the requirements, for example those as noted above, cannot be met at least in some circumstances. For example, when at least one of the SRC UE and DST UE is out of cellular coverage (OoCC) or connected to a different unsynchronized base station, the two UEs would not be synchronized and thus would be unable to communicate using SL. In another example, when the SRC UE is out of cellular coverage, the SRC UE does not have access to the SL server and therefore, would not be able to determine the location of the DST UE's SL-PO.

From US 2018/091263 A1, a method is known that is performed by a first wireless device for performing a transmission of data in a Device-to-Device, D2D, communication to a second wireless device. The transmission of the data is associated with a Hybrid Automatic Repeat reQuest, HARQ, process. The first wireless device first determines that an Acknowledgement or Non-Acknowledgement, ACK/NACK, message of the HARQ process has not been received from the second wireless device for the data during a determined period of time after the transmission of the data. Then, the first wireless device performs retransmissions of the data to the second wireless device until either an ACK message of the HARQ process is received from the second wireless device for the data or until a determined number of retransmissions of the data has been performed.

Moreover, in US 2020/359366 A1, a method and a device for a sidelink in a wireless communication system are provided. A transmission terminal supporting a sidelink performs transmission/reception beam pairing by using control information for a sidelink. The transmission terminal and a reception terminal can find an optimum transmission/reception beam pair on the basis of a method of repeatedly transmitting/receiving control information by the sidelink. Therefore, an appropriate transmission/reception beam pair can be found without repeatedly transmitting a synchronization signal. The reception terminal can provide feedback information on the received control information to the transmission terminal. The transmission terminal can determine an optimum transmission/reception beam pair on the basis of the feedback information.

Still further, US 2017/013575 A1 discloses a method and apparatus for transmitting a synchronization signal for device-to-device (D2D) operation in a wireless communication system. A user equipment (UE) determines that it is out of coverage (OOC). Even though the UE is OOC, the UE continues to transmit a D2D synchronization signal for in-coverage under a specific condition. If the UE determines that it is in coverage before the specific condition is met, the UE transmits the D2D synchronization signal for in-coverage. If the specific condition is met while the UE is OOC, the UE transmits the D2D synchronization signal for OOC.

Therefore, there is a need for a method and apparatus for supporting device to device communication between wireless devices, that is not subject to one or more limitations of the prior art.

This background information is provided to reveal information believed by the applicant to be of possible relevance to the present invention. No admission is necessarily intended, nor should be construed, that any of the preceding information constitutes prior art against the present invention.

### SUMMARY

An object of embodiments of the present invention is to provide a method and apparatus for supporting device to device communication between wireless devices. The scope of the present invention is defined by the appended set of claims. All embodiments presented below are of exemplary nature.

In accordance with embodiments of the present invention, there is provided a method that includes repeatedly transmitting, by a source user equipment (SRC UE), D2D communication information and receiving, by the SRC UE from a destination UE (DST UE), a response to the D2D communication information. The transmission of the D2D communication information is repeated until the response is received and wherein the SRC UE and the DST UE are unsynchronized. The D2D communication information is a D2D timing request message or a D2D synchronization request message or a coverage request message or an out of coverage notification and wherein the response includes timing information and an identifier (ID) of the DST UE.

In some embodiments, the D2D communication information includes one or more of a D2D synchronization signal and D2D data. In some embodiments, the D2D synchronization signal is a unique D2D sync signal or a pseudo-unique D2D sync signal within the synchronization signals of the D2D protocol. In some embodiments, the D2D data is configured using one or more of orthogonal frequency division multiplexing and quadrature phase shift keying.

In some embodiments, the DST UE is configured to monitor for the D2D communication information within a time window.

In some embodiments, the transmission of the D2D communication information is repeated multiple times based on a maximum number of attempts to transmit and a time between attempts.

In some embodiments, the response additionally includes one or more of an identification of a synchronization method, D2D discontinuous reception (D2D DRX) information and receiver (Rx) beacon information.

In some embodiments, a coarse synchronization timing is determined based on a synchronization method.

In some embodiments, the transmission of the response is performed in cooperation with a DST UE sending synchronization signals. In some embodiments, the transmission of the response is performed in cooperation with a DST UE periodically sending the synchronization signals.

In some embodiments, a D2D paging occasion occurs prior to or within a time window that the DST UE monitors for the D2D communication information. In some embodiments, the D2D data includes a D2D timing request message or a D2D synchronization request message or a coverage request message or an out of coverage notification.

In some embodiments, when the SRC UE is precise synchronized with the DST UE, the D2D communication information includes D2D data and excludes a D2D synchronization signal.

In some embodiments, the SRC UE determines timing of transmission of the D2D communication information based on whether the SRC UE is synchronized with the DST UE or whether the SRC UE is unsynchronized with the DST UE.

In some embodiments, a server provides the DST UE with one or more synchronization errors including: coarse synchronization timing error, DST UE synchronization error, SRC UE synchronization error, and time of flight.

In accordance with embodiments of the present invention, there is provided a user equipment (UE) including a processor and machine readable memory storing machine executable instructions. The machine executable instructions, when executed by the processor configure the UE to perform one or more of the methods described above or elsewhere herein.

Embodiments have been described above in conjunctions with aspects of the present invention upon which they can be implemented. Those skilled in the art will appreciate that embodiments may be implemented in conjunction with the aspect with which they are described, but may also be implemented with other embodiments of that aspect. When embodiments are mutually exclusive, or are otherwise incompatible with each other, it will be apparent to those skilled in the art. Some embodiments may be described in relation to one aspect, but may also be applicable to other aspects, as will be apparent to those of skill in the art.

### BRIEF DESCRIPTION OF THE FIGURES

Further features and advantages of the present invention will become apparent from the following detailed description, taken in combination with the appended drawings, in which:
FIG. 1 illustrates an example of resolving a synchronization issue residing in SL communication by transmitting a SYNC signal before SL data according to the prior art.
FIG. 2A illustrates a 3-step approach for a timing request solution supporting SL communication, in accordance with embodiments of the present disclosure.
FIG. 2B illustrates a 2-step approach for a timing request solution supporting SL communication, in accordance with embodiments of the present disclosure.
FIG. 3A illustrates an example of a required Rx SYNC window for the DST UE based on a single SL SYNC attempt by the SRC UE, in accordance with embodiments of the present disclosure.
FIG. 3B illustrates an example of a required Rx SYNC window for the DST UE based on three SL SYNC attempts by the SRC UE, in accordance with embodiments of the present disclosure.
FIGs. 4A to 4C illustrate examples of placing a SL-PO in parallel to the Rx SYNC window and placing the SL-PO before the Rx SYNC window, in accordance with embodiments of the present disclosure.
Fig. 5 illustrates an example scenario wherein the Rx SYNC window occurs every second SL-PO, in accordance with embodiments of the present disclosure.
FIG. 6 illustrates a method for supporting side link communication, in accordance with embodiments of the present disclosure.
FIG. 7 is a schematic diagram of an electronic device according to embodiments of the present disclosure.

It will be noted that throughout the appended drawings, like features are identified by like reference numerals.

### DETAILED DESCRIPTION

### Definitions

It will be readily understood that communication between wireless devices can be enabled in multiple ways, and it can be defined as device to device (D2D) communications. In some embodiments of the present disclosure D2D communication has been defined as sidelink (SL) communications as an example. However, it will be readily understood by a worker skilled in the art how to apply any embodiments which may be defined as SL communications to a more general version of D2D communications. For example, based on the above, the identification of a SL-PO (side link paging occasion) may be interpreted as a D2D-PO as would be applied to D2D communications. It will be further understood that while some of the discussion below relates to D2D communications, for example SL communications, using unlicensed bands, it would be readily understood how to apply such embodiments when using licensed bands as well.

In the present disclosure, the term source (SRC) device is used to define a device, for example a user equipment (UE), which initiates D2D communication with a destination (DST) device, for example a UE. In addition, the term DST device is used to define a device, for example a UE, which receives a request for D2D communication from a SRC device, for example a UE. It will be readily understood, that both the SRC device and the DST device are configured in order to perform both transmission and reception of information that can enable at least D2D communications.

In the present disclosure, the term "Rx Sync window" is used to define a time range that a destination device (e.g. user equipment (UE)) monitors for a side link (SL) synchronization signal.

In the present disclosure, the terms "precise sync" and "precise synchronization" and "precise synchronized" are interchangeably used to define synchronization between devices (e.g. UEs) where a synchronization error is within the cyclic prefix (CP), for example 5µs.

In the present disclosure, the terms "coarse sync" and "coarse synchronization" are interchangeably used to define synchronization between devices (e.g. UE) where synchronization error is within the maximum practical Rx sync window.

Unless defined otherwise, all technical and scientific terms used herein have the same meaning as commonly understood by one of ordinary skill in the art to which this invention belongs.

The present disclosure provides methods and apparatuses for supporting device to device (D2D) communication, for example side link (SL) communication, between wireless devices. According to some of the embodiments, the present disclosure provides methods and apparatuses for (D2D) communication on wireless bands when a source UE (SRC UE) and a destination UE (DST UE) are unsynchronized.

It will be readily understood that communication between wireless devices can be enabled in multiple ways, and it can be defined as device to device (D2D) communications. In some embodiments of the present disclosure D2D communication has been defined as side link (SL) communications as an example. However, it will be readily understood by a worker skilled in the art how to apply any embodiments which may be defined as SL communications to a more general version of D2D communications.

Existing protocols for SL, or more generally D2D protocols, work only where the SRC UE and the DST UE are synchronized to the same cellular synchronization signals and the SRC UE knows the location of the DST UE's SL paging occasion (SL-PO). However, the existing SL protocols cannot be used in some circumstances. For example existing SL protocols cannot be used when at least one of the SRC UE and the DST UE is out of cellular coverage or when the UEs are connected to different unsynchronized base stations (i.e. synchronization problem) or when the SRC UE is not able to access the SL server and therefore does not know the location of the DST UE's SL-PO (i.e. unknown SL-PO location problem). As such, efforts have been made to overcome the limitations of the existing SL protocols, or more generally D2D protocols, in terms of synchronization and unknown SL-PO location.

### Synchronization Problem

Attempts to overcome the synchronization issue residing in the existing SL protocols can include the use of a long SL Rx synchronization window and a variety of different coarse synchronization methods.

### Long SL Rx Sync Window

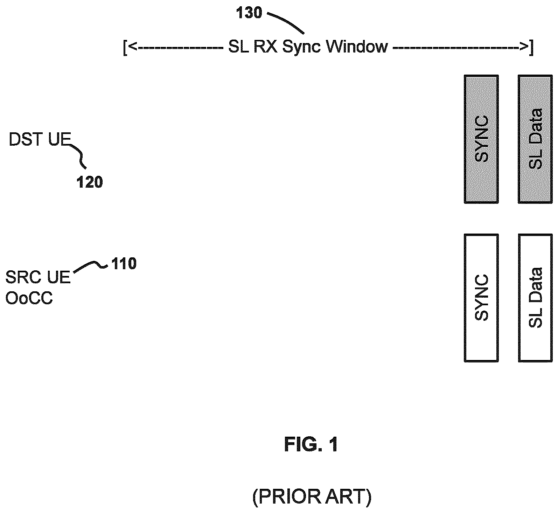

FIG. 1 illustrates an example of resolving a synchronization issue residing in SL communication by transmitting a SYNC signal before SL data. Long-Term Evolution (LTE) device-to-device (D2D) communication uses a technique where the SRC UE **110** transmits an SL synchronization (SYNC) signal before sending SL-data. Upon receiving the SL Sync signal, the DST UE **120** will synchronize to the SRC UE **110** using the received SL Sync signal before trying to decode the SL-data. The DST UE **120** will listen for the SL Sync signal within a certain time range, hereinafter referred to as the SL Rx Sync window. An example of the SL Rx Sync window (e.g. SL Rx Sync window **130**) is also illustrated in FIG. 1.

A problem with this method is that the SRC UE **110** and DST UE **120** need to be coarse synchronized in advance. For example, coarse synchronization may define synchronization between devices (e.g. between UEs) where a synchronization error is within a maximum practical Rx sync window. Otherwise, for example, the SL Rx Sync window **130** would be impractically long. The length of the SL Rx Sync window (e.g. SL Rx Sync window **130**) needs to be long enough to account for timing errors between the SRC UE **110** and DST UE **120.** The timing errors may include, but not limited to, one or more of the following:
- Coarse sync timing error is an error due to the coarse timing method (which is illustrated elsewhere in the present disclosure). Each coarse timing method can have different amounts of error associated therewith.
- DST UE sync error is a timing error in the DST UE (e.g. DST UE **120**). This error usually occurs due to crystal reference oscillator (XTAL) accuracy, for example the accuracy of a crystal oscillator. Generally, the DST UE sync error is equal to approximately (DST XTAL accuracy) x (Time since last Coarse Sync).
- SRC UE sync error which is a timing error in the SRC UE (e.g. SRC UE **110**). This error usually occurs due to XTAL accuracy. Generally, the SRC UE sync error is equal to approximately (SRC XTAL accuracy) x (Time since last Coarse Sync).
- Time of flight which is time required for transmission from the SRC UE (e.g. SRC UE **110**) to the DST UE (e.g. DST UE **120**). Generally, the time of flight is equal to approximately (distance between SRC UE and DST UE) / (speed of light).

Therefore, based on the above, the length of the SL Rx SYNC window can be defined as being substantially equal to or greater than the sum of Coarse Sync Timing Error and DST UE Sync Error and SRC UE Sync Error and Time of Flight.

In order to substantially minimize power consumption, the SL Rx Sync window should be minimized. As such, in order to minimize power consumption, the value of coarse sync timing error, DST UE sync error, SRC UE sync error and time of flight should be known. However, some of these values, such as DST UE sync error, are unknown to the DST UE. As such, the method of minimizing the SL Rx Sync window (by the DST UE) is unknown and therefore means for, at least in part, providing power optimization (e.g. minimizing power consumption) is also unknown.

### Coarse Sync Methods

Other known methods for resolving the synchronization issue residing in SL would be coarse synchronization methods. There are several known coarse synchronization methods that can be used with SL which can include using LTE synchronization signals including primary synchronization signals (PSS) / secondary synchronization signals (SSS) / master information block (MIB), global navigation satellite system (GNSS) based synchronization and side link (SL) beacons. However, each of these coarse synchronization methods has at least some limitations.

### LTE PSS/SSS/MIB

The LTE cellular synchronization signals, for example PSS/SSS/MIB signals, can be used to provide synchronization for SL. The accuracy of these synchronization signals depends on whether the SRC UE and the DST UE are synchronized to the same cell (e.g. same base station). If the SRC UE and DST UE are synchronized to the same cell, there is no sync timing error and therefore, precise timing can be provided. If the SRC UE and the DST UE are synchronized to different base stations, the level of synchronization between the two UEs would depend on cell synchronization. LTE does not require cells to be synchronized but, they can be synchronized. It may be noted that primary synchronization signals (PSS), secondary synchronization signals (SSS) and the master information block (MIB) can be decoded far beyond where user plane activity can be supported (e.g. 160dB maximum coupling loss (MCL)). As such, it is possible to be in PSS/SSS/MIB coverage but out of cellular coverage.

There are a number of problems when using the synchronization signals illustrated above (e.g. PSS, SSS, MIB). For example, when the SRC UE and the DST UE are synchronized to different cells (e.g. different base stations), the two UEs do not know the synchronization error. Also, this method only works within PSS/SSS/MIB coverage and can take several seconds to synchronize in low signal-to-noise Ratio (SNR) (e.g. 160dB MCL) which can negatively impact battery life of the UEs.

### GNSS-Based Synchronization

Global Navigation Satellite System (GNSS) can be also used to provide synchronization for SL. GNSS-based synchronization can provide up to 40ns of synchronization. However, GNSS-based synchronization can take several seconds to get time sync from GNSS, therefore this method of synchronization is not a power efficient method. Furthermore, this method only works outside and can be an expensive method as it requires additional hardware, for example for accessing the GNSS.

### SL Beacons

In LTE device to device (D2D) communications, some UEs are assigned to act like SL beacons by periodically transmitting side link primary synchronization signals (SPSS) and side link secondary synchronization signal (SSSS) followed by a broadcast message which includes the system frame number (and in some configurations a hyper frame number, however this is currently not a feature of LTE D2D communications). This method of assigning a UE to act as a SL beacon can be also used for SL. Whether or when a UE becomes a SL beacon can be pre-configured or self-elected or directed by the SL server. For example, the UE may self-elect to become a SL beacon when it does not receive synchronization signals from any other sources. This method can provide good accuracy unless the SRC UE is not synchronized to the same source as the UE acting as a SL beacon UE. If the SRC UE is not synchronized to the same source as the UE acting as the SL beacon, the accuracy can depend on how closely the SRC UE and UE acting as a SL beacon are synchronized.

Assigning some UEs to act like SL beacons for SL can have some disadvantages. One of the disadvantages is energy consumption. Significant battery power is required for UEs to become SL beacons. Further, for the synchronization signals to be effective, these synchronization signals should be transmitted at known times; however, as SL implementation is based on the constraints of using a shared single HD-FDD radio, it may not be possible to transmit the synchronization signals at precise times.

Accordingly, as illustrated above, each of the above coarse synchronization methods have at least some issues or limitations therewith for providing synchronization for SL. Further, each of the above coarse synchronization methods can require the UE to already have information relating to SL-PO location.

### Unknown SL-PO Location Problem

As stated above, a limitation of current SL protocols is associated with the unknown SL-PO location. Some methods to overcome the unknown SL-PO location issue for SL are discussed below including limitations therewith.

Based on a first method, in order to overcome the unknown SL-PO location, the SL-PO location can be predefined. The UEs (e.g. SRC UE and DST UE) can be pre-configured at the factory with a predefined SL-PO location. This action can be performed by manually pre-configuring the UEs with the possible DST UE IDs and the associated possible extended discontinuous reception (eDRX) values.

However, this pre-configuration method may not always be feasible. For example, when the number of UEs in the group is large, the method may not be scalable as the SRC UE needs to try every possible UE ID in order to find out which DST UE is reachable. Furthermore, this pre-configuration method may not work in conditions where the SL-DRX is dynamic.

Another solution for overcoming the unknown SL-PO location is to configure a UE to act as a SL server. However, there are problems with this method as well. For example, if a UE is configured to act as a SL server, the UE would need to be operating for most of the time and thus, would need a larger battery or potentially a direct power supply (e.g. alternating current (AC) power supply). Further, non-homogeneous or heterogeneous sets of UEs would render such deployment even more complicated. In addition, while the SRC UE can require access to the UE SL server, however, such access is not possible if the SRC UE does not know the location of the SL-PO of the UE SL server.

Another or further solution for overcoming the unknown SL-PO location is to use a mesh protocol. For example, a mesh protocol can be used on top of the SL protocol such that the access to the SL server can be made through substantially any UE which is part of the mesh. However, this method also has a potential problem. For instance, the SRC UE can still require access to at least one UE connected to the mesh. However, such access is not possible if the SRC UE does not know the location of the SL-PO of the SL server.

In order to address at least some of the above problems, there are provided methods and apparatuses for supporting D2D communications, for example side link (SL) communication. In some of the embodiments, the methods and apparatuses can support SL communication where a source (SRC) or destination (DST) UE is unsynchronized.

### Timing Request

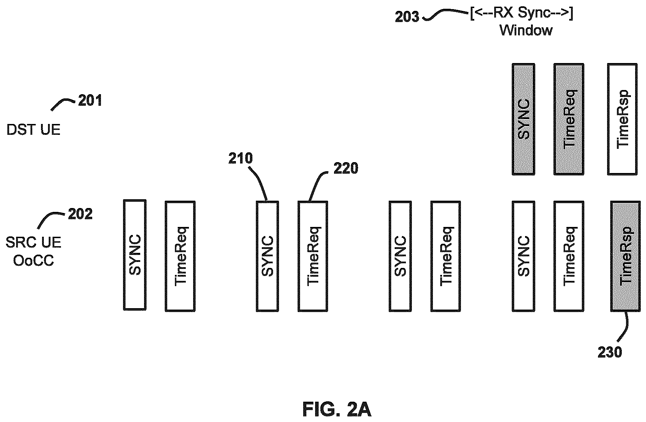

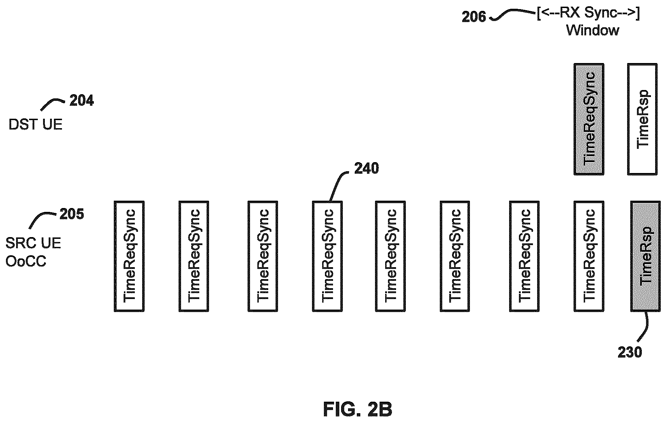

According to some of the embodiments, D2D communications, for example, SL communications, can be supported by using a timing request solution. The timing request solution can resolve both the synchronization problem and the unknown SL-PO location problem which has been noted above. FIGs. 2A and 2B illustrate examples of the timing request solution supporting SL communication, in accordance with embodiments of the present disclosure. Specifically, FIG. 2A illustrates a 3-step approach and FIG. 2B illustrates a 2-step approach of the timing request solution supporting SL communication.

The timing request method can be appropriate for an unsynchronized UE which has no knowledge about the SL-PO (e.g. location of the SL-PO). As illustrated in FIG. 2A, the unsynchronized UE (e.g. SRC UE **202**) blindly and repeatedly transmits a SL- Sync signal (e.g. SYNC **210**) followed by a SL timing request message (e.g. SL-TimeReq **220**) until it receives a timing response message (e.g. SL-TimingRsp **230**) from a DST UE (e.g. DST UE **201**). Since the out of cellular coverage (OoCC) SRC UE (e.g. SRC UE **202**) has no timing information, the SRC UE needs to repeatedly transmit the SL- Sync signal (e.g. SYNC **210**) and the SL timing request message (e.g. SL-TimeReq **220**) until the SL-SYNC signal is received by a DST UE within the DST UE's Rx Sync window (e.g. Rx Sync Window **203**). Upon receipt of the SL timing request message (e.g. SL-TimeReq **220**), each DST UE that correctly receives the SL- Sync signal and SL timing request message transmits a timing response message (e.g. SL-TimeRsp **230**) in response to the receipt of the SL- Sync signal and SL timing request message. The timing response message can include one or more of the following pieces of information:
- *Precise timing information*: µsec timing correction to the nearest subframe (SF) and SF timing
- *Macro timing information*: system frame timing, similar to MIB, and hyper frame timing, similar to SIB1
- *Sync method information*: e.g. GNSS, PSS / SSS / MIB, transmitter (Tx) beacon, etc.
- *UE ID*: ID of the DST UE that may be used to calculate future SL-POs
- *SL-DRX information*: SL-DRX may be used to calculate future SL-POs
- *Receiver (Rx) beacon information*: Rx beacon ID and SL-DRX

While the timing request method as defined above may consume significant power, the method only needs to be done once at power-up and may not be required for re-synchronization. The more SL UEs that exist within range, the higher the probability that the SRC UE receives a timing response message (e.g. SL-TimeRsp **230**) in response to its SL timing request.

In some embodiments, as illustrated in FIG. 2B, the unsynchronized UE (e.g. SRC UE **205**) does not transmit the SL timing request message (e.g. SL-TimeReq **220**) but transmits a special Sync signal (e.g. TimeReqSync **240**) as the SL timing request message (e.g. SL-TimeReq **220** does not carry any required information). In some embodiments, the special Sync signal can be configured as a combination of the SL-Sync signal (e.g. SYNC **210**) and the SL timing request message (e.g. SL-TimeReq **220**). This can be envisioned as a 2-step approach for the timing request method illustrated in FIG. 2B. Upon detecting the special Sync signal (e.g. TimeReqSync **240**) during the Rx Sync Window **206,** the DST UE (e.g. DST UE **204**) broadcasts the timing response message (e.g. SL-TimeRsp **230**). The 2-step approach allows synchronization requests to be sent more frequently.

In some embodiments, the timing request method may be enhanced using optional receiver (Rx) beacons. Rx beacons can be considered to be UEs with larger battery capacity or direct power supply (e.g. AC powered) that are listening for the SL Sync signals more often. The UEs are listening for SL Sync signals more often by being configured with no SL-DRX, shorter SL-DRX cycles or long Rx Sync windows. These configurations can increase the probability that the SRC UE's timing request (e.g. SL-TimeReq **220**) will be responded to. The out of cellular communication UE can learn about an Rx beacon in two ways. For example, information regarding the Rx beacon can be received directly from the SL server or via a mesh SL-UE. As another example, the information regarding the Rx beacon can be received through the SL timing response message (e.g. SL-TimeRsp **230**).

In some embodiments, if there are no Rx beacons, the out of cellular communication UE can request the SL server to declare a UE as a Rx (or Tx) beacon. Advantages of Rx beacons or Tx beacons are known and the advantages can include for example, the feature that Rx beacons do not create traffic or interference, and that Rx beacons can be more efficient with power consumption as they only receive communications and do not transmit.

As stated above, UEs may need to be periodically re-synchronized, for example due to XTAL error. After the initial synchronization, the SRC UE knows at least one DST UE's SL-PO location and optionally, a Rx beacon's SL-PO location which can be used for the SRC UE's re-synchronization. As such, the timing request solution can be more energy efficient compared to other approaches such as GNSS and deep coverage PSS / SSS / MIB.

### Pseudo Unique SL Sync Signals

If all the UEs use the same SL Sync signals, it may be common for a UE to mistakenly detect a SL Sync signal associated with another UE. This can be more common, especially in a congested network or a network that requires a longer Rx Sync window. It may be noted that a Rx Sync window will likely need to be much longer (e.g. many times longer) than the 1 SF designated for SL-PO. Misdetection of the SL Sync signal can cause a waste of power as the UE would decode the SL-Data that is not intended for it. Moreover, the UE may miss the SL Sync signal intended for it, if the correct SL Sync signal is transmitted or broadcasted while the UE is decoding the SL-Data intended for another UE.

According to some of the embodiments, D2D communication, for example SL communications, can be supported wherein different SL Sync signals are assigned to different DST UEs (e.g. assigning a unique or pseudo-unique SL Sync signal to each DST UE) in order to mitigate the above defined problem. In some embodiments, SL Sync signals are not uniquely assigned to all UEs as it may not be practical, depending on the SL Sync signal design, to assign unique SL Sync signals to all UEs. However, assigning a pseudo-unique SL Sync signal can be acceptable (i.e. some overlap is acceptable) as the probability of decoding a SL Sync intended for another UE will be significantly decreased with pseudo-unique SL Sync signal assignment. Moreover, the probability of decoding a SL Sync intended for another UE can be further reduced by ensuring that a unique SL-PO is assigned to the UE such that SL-PO is unique with respect to the close SL-POs, as the risk of misdetection (or collision) is higher between close SL-POs. Since there are a finite number of SL-POs, each SL-PO associated with the UE can be given a unique SL Sync signal, especially with respect to SL-POs that are closely located. Given that the location of the SL-PO is already known, the SRC UE can know which SL Sync to transmit.

### SL Server Provides Coarse Time Sync Error

As stated above, the SL Rx Sync window should be minimized in order to minimize power consumption of the UE. According to some of the embodiments, in order to reduce the SL Rx Sync window, some of synchronization errors present may be provided to the DST UE by the SL server to aid with the mitigation of these synchronization errors. The synchronization errors provided by the SL server can help the DST UE to reduce the SL Rx Sync window. According to some of the embodiments, SL communications can be supported wherein given that the SL Rx Sync window is equal to or greater than the sum of Coarse Sync Timing Error, DST UE Sync Error, SRC UE Sync Error, and Time of Flight, the DST UE can know or manage each of the associated synchronization errors as follows:
- *Coarse Sync Timing Error* depends on the synchronization method or identified synchronization method. As the maximum error should be static, the Coarse Sync Timing error can be provided to the DST UE, for example in some instances by the SL server. If the system uses a different sync method, the errors associated with the respective sync method can be provided to the DST UE.
- *SRC UE Sync Error*: Given the large number of potential SRC UEs, acquiring the SRC UE specific value (e.g. SRC UE specific Sync error) may not be practical. As such, a system-wide wide Maximum SRC UE Sync error can be defined in the system specifications or defined within the SL server. The SRC UE can be re-synchronized close enough to when it transmits the Sync signal in order to ensure the synchronization error of that SRC UE is equal to or less than the defined system-wide Maximum SRC UE Sync Error.
- *DST UE Sync Error*: As illustrated above with respect to the SRC UE Sync Error, the DST UE Sync Error can be managed by the DST UE directly by ensuring that one or both of: 1) the SL Rx Sync window is long enough; and 2) the DST UE re-synchronizes often enough to ensure the DST UE Sync Error does not make the total synchronization error exceed the SL Rx Sync Window (e.g. the DST UE's contribution to the total synchronization error is kept within the SL Rx Sync Window).
- *Time of Flight*: Mitigation of an error associated with the time of flight can be achieved by defining a system-wide Maximum Time of Flight by the SL server or specified with respect to the particular system.

### Multiple SL Attempts

According to some of the embodiments, D2D communications, for example SL communications, can be supported wherein the SL Rx Sync window can be reduced by performing multiple SL attempts. Further, multiple SL attempts may also allow re-synchronization of the UE to be performed less frequently. As noted above, if the required SL Rx Sync window duration is long or re-synchronization of the UEs needs to be performed frequently, power consumption associated with the UE can be expected to be high. For instance, for XTAL of 10ppm (e.g. oscillator frequency stability of 10ppm), 10µsec of time error would be accumulated in every second. If the maximum DST UE Sync error needs to be equal to or less than 20msec, re-synchronization can be required to be performed every 33.4 minutes (10e-6*33.4*60=0.020sec). Re-synchronization using PSS / SSS / MIB at low SNR or GNSS can take up to 10 seconds.

According to some of the embodiments, the multiple SL attempts solution requires the SRC UE to send multiple SL Sync signals and SL data attempts in quick succession. In various embodiments, the maximum number of attempts (e.g. MaxAttempts **310**) and the time between the attempts (e.g. TimeBetweenAttempts **320**) are provided to the SRC UE by the SL server for a particular DST UE.

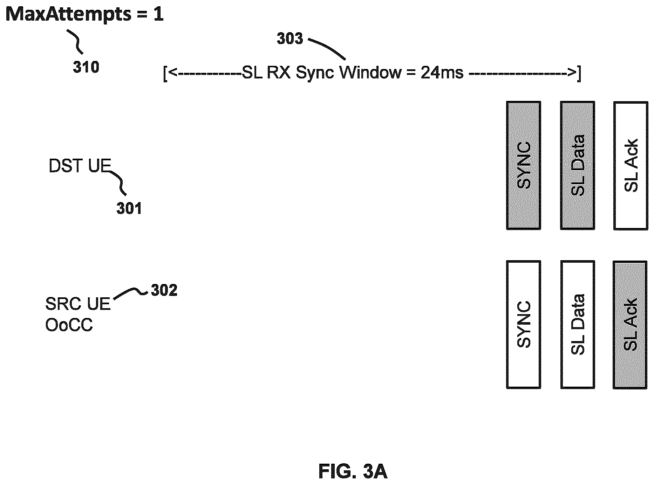

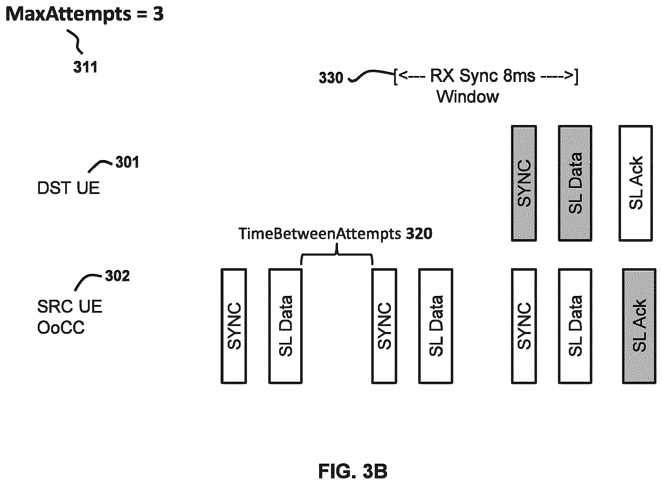

FIGs. 3A and 3B illustrates a reduction of the required Rx Sync window for the DST UE by increasing the number of SL attempts by the SRC UE, in accordance with embodiments of the present disclosure. Specifically, FIG. 3A illustrates the Rx Sync window for a single sync attempt and FIG. 3B illustrates the Rx Sync window for 3 sync attempts. As illustrated by comparing FIG. 3A and FIG. 3B, the required Rx Sync window for the DST UE can be reduced from 24ms to 8ms by increasing the number of attempts sent by the SRC UE from 1 to 3.

As illustrated in FIG. 3A, the SRC UE 302 transmits a single Sync signal and a single SL Data signal and in order to ensure that the DST UE **301** receive these signals the SL Rx Sync window has a particular duration, for example 24ms. As illustrated in FIG. 3B, by increasing the number of sync attempts, the Rx Sync window **330** can be smaller than the Rx Sync window **303** illustrated in FIG. 3A.

According to some of the embodiments, the time between the attempts (e.g. TimeBetweenAttempts **320**) is equal to the DST SL Rx Sync window **330.** The DST SL Rx SYNC window **330** must be at least long enough to send the SL SYNC signal (1ms), detect the SL Sync signal (1ms), send SL data (1ms), decode the SL Data (3ms), send an SL Acknowledgement (1ms) and decode the SL Acknowledgement (1ms). The values defined in parentheses for each of the above noted activities performed by the respective UE are practical times required for each respective activity. As the sum of the practical time required for each activity is 8ms, the length of the DST SL Rx Sync window **330** must be at least 8ms to allow for all of the above noted activities to be completed during the Rx Sync window. As such, for this example, the time between the attempts (e.g. TimeBetweenAttempts **320**) equals to 8ms.

According to some of the embodiments, the power required for the SRC UE when transmitting *n* sync attempts instead of 1 sync attempt is less than the power required when using a longer Rx Sync window at the DST UE, due to the less frequent SL Data transmissions.

### Parallel SYNC/SL Decode or SL-PO Before SYNC

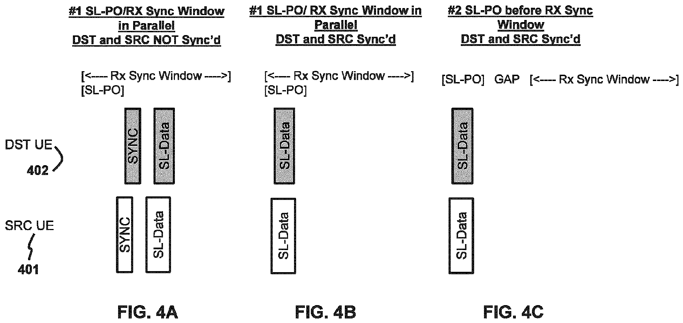

Currently existing SL protocols require always transmitting the Sync signal before transmitting the SL-Data. However, such a requirement increases latency. According to some of the embodiments, this latency issue can be resolved by placing SL-PO decoding in parallel to the Rx Sync window time or by placing SL-PO before the Rx Sync window. FIGs. 4A to 4C illustrate examples of placing a SL-PO in parallel to the Rx SYNC window and placing the SL-PO before the Rx SYNC window, in accordance with embodiments of the present disclosure. FIG. 4A illustrates transmissions of the DST UE **402** and the SRC UE **401** when the SL-PO and Rx Sync window are in parallel and the DST UE and the SRC UE are not synchronized. FIG. 4B illustrates transmissions of the DST UE **402** and the SRC UE **401** when the SL-PO and Rx Sync window are in parallel and the DST UE and the SRC UE are synchronized. FIG. 4C illustrates transmissions of the DST UE **402** and the SRC UE **401** when the SL-PO is located before the Rx Sync window and the DST UE and the SRC UE are synchronized.

According to some of the embodiments, D2D communications, for example SL communications, can be supported wherein the SRC UEs may be provided with an option to not send a SYNC signal before the SL-Data when the SRC UE knows it is synchronized with the DST UE. This configuration can reduce latency and reduce power consumption by the UE. This method can be used for example when both the SRC UE and DST UE are using PSS / SSS / MIB synchronization method associated with the same base station.

According to some of the embodiments, the SRC UE can choose to skip sending a Sync signal and transmit SL-Data only. In such embodiments, only if the SL-Data transmission fails (i.e. only if the SRC UE does not receive an acknowledgement message from the DST UE), the SRC UE transmits a Sync signal followed by SL-Data at the next available Rx Sync window. If an acknowledgement message is expected before the end of the Rx Sync window, the SRC UE does not even need to wait for the next SL-DRX cycle.

According to some of the embodiments, skipping transmission of the Sync signal can be beneficial when the SRC UE prioritizes extending its battery life over SL latency. Skipping transmission of the Sync signal can also be beneficial when the SRC UE has some form of *a-priori* knowledge that the DST UE is likely to be synchronized with it (e.g. when the two UEs are in the same cell). The SL server can optionally hold the information whether the SRC UE and DST UE are synchronized (e.g. PSS / SSS / MIB and corresponding cell ID).

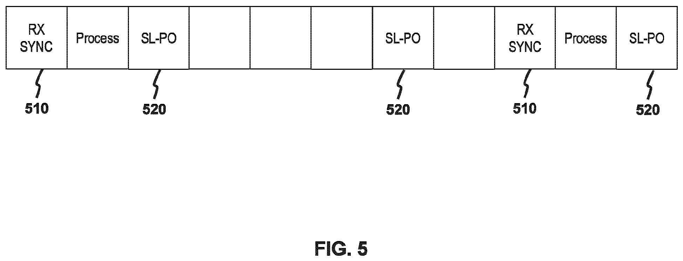

Having a Rx Sync window for every SL-PO can draw a considerable amount of power from the DST UE, in particular when most UEs are synchronized. According to some of the embodiments, not every SL-PO needs to have an associated Rx Sync window. FIG. 5 illustrates a non-limiting example scenario where the Rx Sync window occurs for every second SL-PO, in accordance with embodiments of the present disclosure. Referring to FIG. 5, the period of the SL-PO **520** is half that of Rx Sync window **510.** As would be readily understood, the SL-PO may equally be considered to be a D2D-PO.

According to some of the embodiments, as the SRC UE needs to know locations of the Rx Sync window, the SL server can provide the SRC UE with information regarding the Rx Sync window location.

### Timing Via SL Sync

According to some of the embodiments, D2D communications, for example SL communications, can be supported, wherein a UE is willing to use extra power in order to determine the timing of the transmission of the SL-Data signal (e.g. less than 1 SF timing) by decoding the SL Sync signals from any UE. This decoding of the Sync signal can provide timing accuracy equal to or less than the sum of the SRC UE Sync Error and the Coarse Sync Timing Error. If the sum of the SRC UE Sync Error and the Coarse Sync Timing is greater than 1ms, timing of the SL-Data transmission may not be inferred unless the SL Sync signal is restricted to be transmitted on a certain SF (e.g. the 5^{th} SF of every frame). In a case where the SL Sync signal is restricted to be transmitted on certain SF, the SL-Data transmission timing can be determined to be within a 10ms radio frame.

Upon determination of the timing of the SL-Data transmission, the SRC UE can directly transmit the SL-Data on the SL-PO of the DST UE without transmitting an SL Sync signal. This method can be used if the SL Sync signal comes from a UE that is in cell coverage or an out of cellular coverage UE that in turn receives the SL Sync signal from a UE that is within cell coverage. An indication of this qualification of the above can be required in order to validate the SL Sync signal.

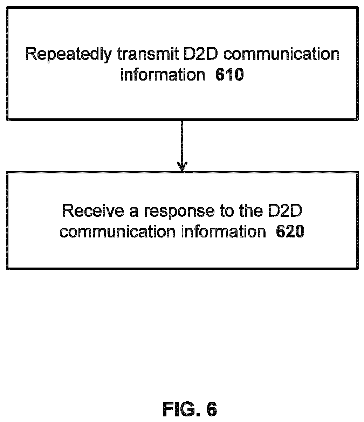

According to some of the embodiments, there is provided a method and apparatus for unsynchronized user equipment (UE) to perform device to device communication, for example side link communication. With reference to FIG. 6, the method includes repeatedly transmitting, by a source user equipment (SRC UE), D2D communication (e.g. SL communication) information **610** and receiving, by the SRC UE from the DST UE, a response to the D2D communication information **620.** The SRC UE continues repeated transmission of D2D communication information until the response is received.

According to some of the embodiments, the D2D communication information comprises an SL sync signal and an SL timing request message, the SL sync signal being transmitted prior to the SL timing request or other D2D communication information as would be readily understood. According to some of the embodiments, the SL communication information is a single synchronization signal, the single synchronization signal configured at least in part as a SL sync signal and a SL timing request message.

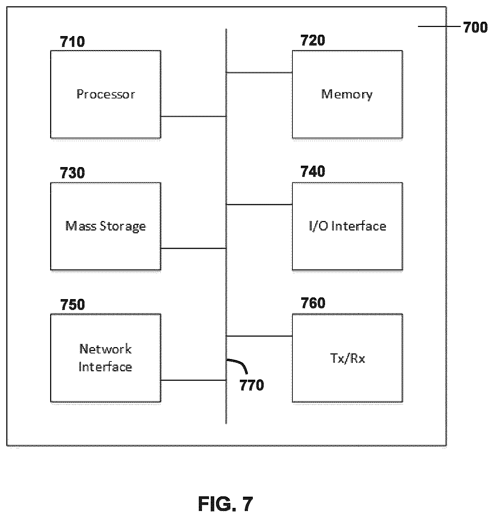

FIG. 7 is a schematic diagram of an electronic device **700** that may perform any or all of the steps of the above methods and features described herein, according to different embodiments of the present invention. For example, a UE may be configured as the electronic device.

As shown, the device includes a processor **710,** memory **720,** non-transitory mass storage **730,** I/O interface **740,** network interface **750,** and a transceiver **760,** all of which are communicatively coupled via bi-directional bus **770.** According to certain embodiments, any or all of the depicted elements may be utilized, or only a subset of the elements. Further, the device **700** may contain multiple instances of certain elements, such as multiple processors, memories, or transceivers. Also, elements of the hardware device may be directly coupled to other elements without the bi-directional bus.

The memory **720** may include any type of non-transitory memory such as static random access memory (SRAM), dynamic random access memory (DRAM), synchronous DRAM (SDRAM), read-only memory (ROM), any combination of such, or the like. The mass storage element **730** may include any type of non-transitory storage device, such as a solid state drive, hard disk drive, a magnetic disk drive, an optical disk drive, USB drive, or any computer program product configured to store data and machine executable program code. According to certain embodiments, the memory **720** or mass storage **730** may have recorded thereon statements and instructions executable by the processor **710** for performing any of the aforementioned method steps described above.

As will be readily understood by the description above, the terms base station and network node can be interchangeably used to define an evolved NodeB (eNB), a next generation NodeB (gNB) or other base station or network node configuration.

As previously discussed, it will be readily understood that communication between wireless devices can be enabled in multiple ways, and it can be defined as device to device (D2D) communications. In some embodiments of the present disclosure D2D communication has been defined as side link (SL) communications as an example. However, it will be readily understood by a worker skilled in the art how to apply any embodiments which may be defined as SL communications to a more general version of D2D communications.

In accordance with embodiments of the present invention, there is provided a method that includes repeatedly transmitting, by a source user equipment (SRC UE), SL communication information and receiving, by the SRC UE from a destination UE (DST UE), a response to the SL communication information. The SRC UE continues repeated transmission of SL communication information until the response is received.

According to some embodiments, the SL communication information includes a SL sync signal. According to some embodiments, the SL communication information includes SL-data. According to some embodiments, the SL-data is one or more of: a SL timing request message, a SL sync request message, configured using orthogonal frequency division multiplexing and configured using quadrature phase shift keying.

According to some embodiments, the SRC UE is synchronized with the DST UE and the SL communication information includes SL-data and excludes a SL sync signal. According to some embodiments, the SRC UE is unsynchronized with the DST UE, wherein the SL communication information includes the SL sync signal and the SL-data, wherein the SL sync signal is transmitted prior to the SL-data. According to some embodiments, the SL communication information is a single synchronization signal, the single synchronization signal configured at least in part as a SL sync signal and a SL timing request. According to some embodiments, the SL communication information comprises a SL sync signal and SL data, wherein the SL sync signal is transmitted prior to the SL data.

According to some embodiments, the SRC UE determines timing of transmission of the SL communication information by decoding the SL communication information. According to some embodiments, the DST UE is configured to monitor for the SL communication information within a time window.

According to some embodiments, transmission of the SL communication information is repeated multiple times based on a maximum number of attempts to transmit and a time between the attempts. According to some embodiments, the response includes one or more of: precise timing, macro timing, a synchronization method, an identifier (ID) of the DST UE, SL-discontinuous reception (SL-DRX) information and receiver (Rx) beacon information. According to some embodiments, receiving by the DST UE is performed during a receiver (Rx) sync time window, wherein the Rx sync time window is configured to occur periodically or after a fixed duration or continuously for a DST UE as desired by the application / use. According to some embodiments, transmission of the SL communication information is performed in cooperation with a receiver (Rx) beacon.

According to some embodiments, a server provides the DST UE with one or more synchronization errors including: Coarse Sync Timing Error, DST UE Sync Error, SRC UE Sync Error, and Time of Flight. According to some embodiments, a length of time that the DST UE monitors for the SL communication information is equal to or greater than a sum of the synchronization errors. According to some embodiments, the Coarse Sync Timing Error is determined based on a synchronization method.

In accordance with embodiments of the present invention, there is provided a user equipment including a processor and machine readable memory, which stores machine executable instructions. The machine executable instructions which when executed by the processor, configures the UE to repeatedly transmit SL communication information and receive, from a destination UE (DST UE), a response to the SL communication information. The UE is configured to continue repeated transmission of SL communication information until the response is received.

It will be appreciated that, although specific embodiments of the technology have been described herein for purposes of illustration, various modifications may be made without departing from the scope of the technology. The specification and drawings are, accordingly, to be regarded simply as an illustration of the invention as defined by the appended claims, and are contemplated to cover any and all modifications, variations, combinations or equivalents that fall within the scope of the present invention. In particular, it is within the scope of the technology to provide a computer program product or program element, or a program storage or memory device such as a magnetic or optical wire, tape or disc, or the like, for storing signals readable by a machine, for controlling the operation of a computer according to the method of the technology and/or to structure some or all of its components in accordance with the system of the technology.

Acts associated with the method described herein can be implemented as coded instructions in a computer program product. In other words, the computer program product is a computer-readable medium upon which software code is recorded to execute the method when the computer program product is loaded into memory and executed on the microprocessor of the wireless communication device.

Acts associated with the method described herein can be implemented as coded instructions in plural computer program products. For example, a first portion of the method may be performed using one computing device, and a second portion of the method may be performed using another computing device, server, or the like. In this case, each computer program product is a computer-readable medium upon which software code is recorded to execute appropriate portions of the method when a computer program product is loaded into memory and executed on the microprocessor of a computing device.

Further, each step of the method may be executed on any computing device, such as a personal computer, server, PDA, or the like and pursuant to one or more, or a part of one or more, program elements, modules or objects generated from any programming language, such as C++, Java, or the like. In addition, each step, or a file or object or the like implementing each said step, may be executed by special purpose hardware or a circuit module designed for that purpose.

It is obvious that the foregoing embodiments of the invention are examples and can be varied in many ways. Such present or future variations are not to be regarded as a departure from the scope of the invention, and all such modifications as would be obvious to one skilled in the art are intended to be included within the scope of the invention, as defined by the following claims.

## Claims

1. A method for supporting device to device, D2D, communication when a source user equipment, SRC UE, and a destination user equipment, DST UE, are unsynchronized, the method comprising:
repeatedly transmitting (610), by the SRC UE (401), D2D communication information; and receiving (620), by the SRC UE (410) from the DST UE (402), a response to the D2D communication information;
wherein transmission of the D2D communication information is repeated until the response is received;
wherein the response includes one or more of precise timing, macro timing, a synchronization method, an identifier, ID, of the DST UE, D2D discontinuous reception, D2D DRX, information and receiver, Rx, beacon information;
wherein the D2D communication information is one or more of a D2D timing request message, a D2D sync request message and a coverage request message; and
wherein the SRC UE resolves the synchronization at least in part using the response.

2. The method of claim 1, wherein the D2D communication information includes one or more of a D2D synchronization signal and D2D data.

3. The method of claim 2, wherein the D2D data is a D2D timing request message or a D2D sync request message.

4. The method of claim 1, wherein, when the SRC UE (401) is synchronized with the DST UE (402), the D2D communication information includes D2D data and excludes a D2D sync signal or wherein, when the SRC UE is unsynchronized with the DST UE, the D2D communication information includes the D2D sync signal and the D2D data, the D2D sync signal transmitted prior to the D2D data.

5. The method of claim 1, wherein the D2D communication information is a single synchronization signal, the single synchronization signal configured at least in part as a D2D sync signal and a D2D timing request.

6. The method of claim 2, wherein the SRC UE (401) determines timing of transmission of the D2D communication information based on whether the SRC UE is synchronized with the DST UE (402) or whether the SRC UE is unsynchronized with the DST UE.

7. The method of claim 1, wherein a server provides the DST UE (402) with one or more synchronization errors including: coarse synchronization timing error, DST UE synchronization error, SRC UE synchronization error, and time of flight, wherein the coarse synchronization timing error is determined based on a synchronization method.

8. A user equipment, UE, configured for device to device, D2D, communication when the UE and a destination user equipment, DST UE, are unsynchronized, the UE comprising:
a processor; and
machine readable memory storing machine executable instructions which when executed by the processor configure the UE to:
repeatedly transmit (610) device to device, D2D, communication information; and
receive (620), from the DST UE (402), a response to the D2D communication information; wherein transmission of the D2D communication information is repeated until the response is received;
wherein the response includes one or more of precise timing, macro timing, a synchronization method, an identifier, ID, of the DST UE, D2D discontinuous reception, D2D DRX, information and receiver, Rx, beacon information;
wherein the D2D communication information is one or more of a D2D timing request message, a D2D sync request message and a coverage request message; and
wherein the UE resolves the synchronization at least in part using the response.

9. The UE of claim 8, wherein the D2D communication information includes one or more of a D2D synchronization signal and D2D data.

10. The UE of claim 9, wherein the D2D data is a D2D timing request message or a D2D sync request message.

11. The UE of claim 8, wherein, when the SRC UE (401) is synchronized with DST UE (402), the D2D communication information includes D2D data and excludes a D2D sync signal or wherein, when the SRC UE is unsynchronized with the DST UE, the D2D communication information includes the D2D sync signal and the D2D data, the D2D sync signal transmitted prior to the D2D data.

12. The UE of claim 8, wherein the D2D communication information is a single synchronization signal, the single synchronization signal configured at least in pat as a D2D sync signal and a D2D timing request.

13. The UE of claim 8, wherein a server provides the DST UE (402) with one or more synchronization errors including: coarse synchronization timing error, DST UE synchronization error, UE synchronization error, and time of flight, wherein the coarse synchronization timing error is determined based on a synchronization method.

## Patentansprüche

1. Verfahren zum Unterstützen einer Gerät-zu-Gerät (Device to Device bzw. D2D)-Kommunikation, wenn ein Quellen-Benutzergerät (Source User Equipment bzw. SRC-UE) und ein Ziel-Benutzergerät (Destination User Equipment bzw. DST-UE) nicht synchronisiert sind, wobei das Verfahren umfasst:
wiederholtes Senden (610), durch das SRC-UE (401), von D2D-Kommunikationsinformationen, und
Empfangen (620), durch das SRC-UE (410) von dem DST-UE (402), einer Antwort auf die D2D-Kommunikationsinformationen,
wobei das Senden der D2D-Kommunikationsinformationen wiederholt wird, bis die Antwort empfangen wird,
wobei die Antwort ein präzises Timing, ein Makro-Timing, eine Synchronisationsmethode, einen Identifizierer (ID) des DST-UE, D2D-Diskontinuierlichempfang (D2D-DRX)-Informationen und/oder Empfänger (Rx)-Beacon-Informationen enthält,
wobei die D2D-Kommunikationsinformationen eine D2D-Timing-Anfragenachricht, eine D2D-Synchronisation-Anfragenachricht und/oder eine Abdeckungsanfragenachricht sind, und
wobei das SRC-UE die Synchronisation wenigstens teilweise unter Verwendung der Antwort löst.

2. Verfahren nach Anspruch 1, wobei die D2D-Kommunikationsinformationen ein D2D-Synchronisationssignal und/oder D2D-Daten enthalten.

3. Verfahren nach Anspruch 2, wobei die D2D-Daten eine D2D-Timing-Anfragenachricht oder eine D2D-Synchronisation-Anfragenachricht sind.

4. Verfahren nach Anspruch 1, wobei, wenn das SRC-UE (401) mit dem DST-UE (402) synchronisiert ist, die D2D-Kommunikationsinformationen D2D-Daten enthalten und ein D2D-Synchronisationssignal ausschließen, oder wobei, wenn das SRC-UE nicht mit dem DST-UE synchronisiert ist, die D2D-Kommunikationsinformationen das D2D-Synchronisationssignal und die D2D-Daten enthalten, wobei das D2D-Synchronisationssignal vor den D2D-Daten gesendet wird.

5. Verfahren nach Anspruch 1, wobei die D2D-Kommunikationsinformationen ein einzelnes Synchronisationssignal sind, wobei das einzelne Synchronisationssignal wenigstens teilweise als ein D2D-Synchronisationssignal und eine D2D-Timing-Anfrage konfiguriert ist.

6. Verfahren nach Anspruch 2, wobei das SRC-UE (401) das Timing des Sendens der D2D-Kommunikationsinformationen basierend darauf, ob das SRC-UE mit dem DST-UE (402) synchronisiert ist oder ob das SRC-UE nicht mit dem DST-UE synchronisiert ist, bestimmt.

7. Verfahren nach Anspruch 1, wobei ein Server zu dem DST-UE (402) einen oder mehrere Synchronisationsfehler vorsieht, die einen groben Synchronisationstiming-Fehler, einen DST-UE-Synchronisationsfehler, einen SRC-UE-Synchronisationsfehler und eine Laufzeit umfassen, wobei der grobe Synchronisationstiming-Fehler basierend auf einer Synchronisationsmethode bestimmt wird.

8. Ein Benutzergerät (User Equipment bzw. UE), das für eine Gerät-zu-Gerät (Device to Device bzw. D2D)-Kommunikation konfiguriert ist, wenn das UE und ein Ziel-Benutzergerät (Destination User Equipment bzw. DST-UE) nicht synchronisiert sind, wobei das UE umfasst:
einen Prozessor, und
einen maschinenlesbaren Speicher, der maschinenausführbare Befehle speichert, die bei einer Ausführung durch den Prozessor das UE konfigurieren zum:
wiederholten Senden (610) von Gerät-zu-Gerät (Device to Device bzw. D2D)-Kommunikationsinformationen, und
Empfangen (620), von dem DST-UE (402), einer Antwort auf die D2D-Kommunikationsinformationen,
wobei das Senden der D2D-Kommunikationsinformationen wiederholt wird, bis die Antwort empfangen wird,
wobei die Antwort ein präzises Timing, ein Makro-Timing, eine Synchronisationsmethode, einen Identifizierer (ID) des DST-UE, D2D-Diskontinuierlichempfang (D2D-DRX)-Informationen und/oder Empfänger (Rx)-Beacon-Informationen enthält,
wobei die D2D-Kommunikationsinformationen eine D2D-Timing-Anfragenachricht, eine D2D-Synchronisation-Anfragenachricht und/oder eine Abdeckungsanfragenachricht sind, und
wobei das UE die Synchronisation wenigstens teilweise unter Verwendung der Antwort löst.

9. UE nach Anspruch 8, wobei die D2D-Kommunikationsinformationen ein D2D-Synchronisationssignal und/oder D2D-Daten enthalten.

10. UE nach Anspruch 9, wobei die D2D-Daten eine D2D-Timing-Anfragenachricht oder eine D2D-Synchronisation-Anfragenachricht sind.

11. UE nach Anspruch 8, wobei, wenn das SRC-UE (401) mit dem DST-UE (402) synchronisiert ist, die D2D-Kommunikationsinformationen D2D-Daten enthalten und ein D2D-Synchronisationssignal ausschließen, oder wobei, wenn das SRC-UE nicht mit dem DST-UE synchronisiert ist, die D2D-Kommunikationsinformationen das D2D-Synchronisationssignal und die D2D-Daten enthalten, wobei das D2D-Synchronisationssignal vor den D2D-Daten gesendet wird.

12. UE nach Anspruch 8, wobei die D2D-Kommunikationsinformationen ein einzelnes Synchronisationssignal sind, wobei das einzelne Synchronisationssignal wenigstens teilweise als ein D2D-Synchronisationssignal und eine D2D-Timing-Anfrage konfiguriert ist.

13. UE nach Anspruch 8, wobei ein Server zu dem DST-UE (402) einen oder mehrere Synchronisationsfehler vorsieht, die einen groben Synchronisationstiming-Fehler, einen DST-UE-Synchronisationsfehler, einen UE-Synchronisationsfehler und eine Laufzeit umfassen, wobei der grobe Synchronisationstiming-Fehler basierend auf einer Synchronisationsmethode bestimmt wird.

## Revendications

1. Procédé de prise en charge d'une communication de dispositif à dispositif, D2D, lorsqu'un équipement utilisateur source, UE SRC, et un équipement utilisateur de destination, UE DST, ne sont pas synchronisés, le procédé comprenant :
la transmission répétée (610), par le UE SRC (401), d'informations de communication D2D ; et
la réception (620), par le UE SRC (410) en provenance du UE DST (402), d'une réponse aux informations de communication D2D ;
dans lequel la transmission des informations de communication D2D est répétée jusqu'à réception de la réponse ;
dans lequel la réponse comporte un ou plusieurs parmi un cadencement précis, un cadencement macro, un procédé de synchronisation, un identifiant, ID, du UE DST, des informations de réception discontinue D2D, DRX D2D, et des informations de balise de récepteur, Rx, ;
dans lequel les informations de communication D2D sont un ou plusieurs parmi un message de demande de cadencement D2D, un message de demande de synchronisation D2D et un message de demande de couverture ; et
dans lequel le UE SRC résout la synchronisation au moins en partie à l'aide de la réponse.

2. Procédé selon la revendication 1, dans lequel les informations de communication D2D comportent un ou plusieurs parmi un signal de synchronisation D2D et des données D2D.

3. Procédé selon la revendication 2, dans lequel les données D2D sont un message de demande de cadencement D2D ou un message de demande de synchronisation D2D.

4. Procédé selon la revendication 1, dans lequel, lorsque le UE SRC (401) est synchronisé avec le UE DST (402), les informations de communication D2D comportent des données D2D et excluent un signal de synchronisation D2D, ou dans lequel, lorsque le UE SRC n'est pas synchronisé avec le UE DST, les informations de communication D2D comportent le signal de synchronisation D2D et les données D2D, le signal de synchronisation D2D étant transmis avant les données D2D.

5. Procédé selon la revendication 1, dans lequel les informations de communication D2D sont un signal de synchronisation unique, le signal de synchronisation unique étant configuré au moins en partie sous forme d'un signal de synchronisation D2D et d'une demande de cadencement D2D.

6. Procédé selon la revendication 2, dans lequel le UE SRC (401) détermine le cadencement de transmission des informations de communication D2D sur la base du fait que le UE SRC est synchronisé avec le UE DST (402) ou du fait que le UE SRC n'est pas synchronisé avec le UE DST.

7. Procédé selon la revendication 1, dans lequel un serveur fournit au UE DST (402) une ou plusieurs erreurs de synchronisation comportant : une erreur de cadencement de synchronisation grossière, une erreur de synchronisation du UE DST, une erreur de synchronisation du UE SRC, et un temps de vol, dans lequel l'erreur de cadencement de synchronisation grossière est déterminée sur la base d'un procédé de synchronisation.

8. Équipement utilisateur, UE, configuré pour une communication de dispositif à dispositif, D2D, lorsque l'UE et un équipement utilisateur de destination, UE DST, ne sont pas synchronisés, l'UE comprenant :
un processeur ; et
une mémoire lisible par machine stockant des instructions exécutables par machine qui, lorsqu'elles sont exécutées par le processeur, configurent l'UE pour :
transmettre de manière répétée (610) des informations de communication de dispositif à dispositif, D2D ; et
recevoir (620), en provenance du UE DST (402), une réponse aux informations de communication D2D ;
dans lequel la transmission des informations de communication D2D est répétée jusqu'à réception de la réponse ;
dans lequel la réponse comporte un ou plusieurs parmi un cadencement précis, un cadencement macro, un procédé de synchronisation, un identifiant, ID, du UE DST, des informations de réception discontinue D2D, DRX D2D, et des informations de balise de récepteur, Rx, ;
dans lequel les informations de communication D2D sont un ou plusieurs parmi un message de demande de cadencement D2D, un message de demande de synchronisation D2D et un message de demande de couverture ; et
dans lequel le UE résout la synchronisation au moins en partie à l'aide de la réponse.

9. UE selon la revendication 8, dans lequel les informations de communication D2D comportent un ou plusieurs parmi un signal de synchronisation D2D et des données D2D.

10. UE selon la revendication 9, dans lequel les données D2D sont un message de demande de cadencement D2D ou un message de demande de synchronisation D2D.

11. UE selon la revendication 8, dans lequel, lorsque le UE SRC (401) est synchronisé avec le UE DST (402), les informations de communication D2D comportent des données D2D et excluent un signal de synchronisation D2D, ou dans lequel, lorsque le UE SRC n'est pas synchronisé avec le UE DST, les informations de communication D2D comportent le signal de synchronisation D2D et les données D2D, le signal de synchronisation D2D étant transmis avant les données D2D.

12. UE selon la revendication 8, dans lequel les informations de communication D2D sont un signal de synchronisation unique, le signal de synchronisation unique étant configuré au moins en partie sous forme d'un signal de synchronisation D2D et d'une demande de cadencement D2D.

13. UE selon la revendication 8, dans lequel un serveur fournit au UE DST (402) une ou plusieurs erreurs de synchronisation comportant : une erreur de cadencement de synchronisation grossière, une erreur de synchronisation du UE DST, une erreur de synchronisation de l'UE, et un temps de vol, dans lequel l'erreur de cadencement de synchronisation grossière est déterminée sur la base d'un procédé de synchronisation.
